# EUROPEAN PATENT SPECIFICATION

(11) **EP 3 625 479 B1**
(45) Date of publication and mention of the grant of the patent: **17.03.2021**
(21) Application number: 18731518.9
(22) Date of filing: 17.05.2018
(51) Int. Cl.: F16H 7/08

(54) **ACCESSORY DRIVE FOR AN INTERNAL COMBUSTION ENGINE OF A MOTOR VEHICLE**
HILFSANTRIEB FÜR EINEN VERBRENNUNGSMOTOR EINES KRAFTFAHRZEUGS
RELAIS D'ACCESSOIRES POUR MOTEUR À COMBUSTION INTERNE D'UN VÉHICULE AUTOMOBILE

(30) Priority: 17.05.2017 IT 201700053604
(43) Date of publication of application: 25.03.2020
(73) Proprietor: Dayco Europe S.R.L., 66100 Chieti (IT)
(72) Inventor: MONTANI, Andrea, 66100 Chieti (IT); CARICCIA, Gianluca, 66100 Chieti (IT); ANGELUCCI, Emanuele, 66100 Chieti (IT); BERTAGGIA, Sabrina, 66100 Chieti (IT); UBERTIS ALBANO, Claudio, 66100 Chieti (IT)
(74) Representative: Faraldi, Marco
(86) International application number: PCT/IB2018/053478
(87) International publication number: WO 2018/211451

(56) References cited:
- EP-A1- 2 154 394
- WO-A1-00/57085
- FR-A1- 2 957 127
- FR-A1- 2 987 412

## Description

### TECHNICAL FIELD

The present invention relates to an accessory drive for an internal combustion engine of a motor vehicle.

### BACKGROUND ART

In motor vehicles, a reversible electric machine is increasingly frequently used in place of the conventional alternator; said electric machine can operate as a generator but also as an electric motor at the start-up or as a booster motor.

The accessory drive generally comprises a pulley connected to the drive shaft and a pulley connected to the rotor of the electric machine and can comprise one or more pulleys for driving other accessories, for example the conditioning system compressor. The accessory drive further comprises a belt for transmission of the movement between the above-mentioned pulleys and a tensioner adapted to ensure a correct minimum tension level of the belt and avoid slipping between the same and the pulleys.

In conventional accessory drives, in which the electric machine is an alternator driven by the engine, the tensioner acts on the slack branch of the belt, i.e. the branch positioned downstream of the engine and upstream of the alternator with reference to the direction of movement of the belt.

The use of a reversible electric machine means that the branch of the belt that is tensioned in the operating conditions in which the electric machine is driven by the engine becomes the slack branch when the torque is delivered by the electric machine.

Various solutions have therefore been developed, which enable both branches of the belt to be tensioned.

One solution consists for example in using a tensioner with two arms hinged in a common pin and bearing respective pulleys. The arms are subject to the elastic force of a spring which moves them in proximity to each other so as to maintain the pulleys into contact with respective branches of the belt. An example of this solution is described for example in EP 1581753-A. The common axis of the two arms can be inside or outside the path of the belt.

Another solution consists in mounting the tensioner on the electric machine. According to this solution, the tensioner comprises an annular element rotating about the axis of the electric machine and bearing a pulley, and an arm articulated or sliding in respect to the annular element and bearing the other pulley; a spring is interposed between the annular element and the arm so as to push the pulleys into contact with the belt.

One problem connected with the known solutions is the following.

Both the belt and the layout of the drive are subject to production and assembly tolerances. Therefore there can be marked differences in installation tension (nominal tension), and consequently very variable tensioner installation positions.

Consider for example the following limit conditions:
1) the belt length is at the upper limit of its tolerance field, and development of the belt revolution, depending on the centre distances between the pulleys axis on which it is fitted, is at the lower limit of its tolerance field; and
2) the belt length is at the lower limit of its tolerance field and the development of the belt revolution is at the upper limit of its tolerance field.

It is evident that condition 1 will result in an installation tension (nominal) much lower than condition 2.

The belt tension cannot drop below a threshold value (or end-of-life value) below which, the correct operation of the drive is not ensured and slipping and noise can occur.

In the known drives, therefore, taking account of the above-mentioned tolerances and the natural elongation of the belt during its life, the design value of the nominal tension is oversized to ensure that the tension is maintained above the minimum value for the entire predicted life of the belt also in the worst case (condition 1 described above).

It follows that the known drives operate at a higher tension level than functionally necessary, which determines undesired losses and a consequent increase in consumption.

Furthermore, the drive components, and in particular the tensioner, must be sized for a higher tension than necessary, and are therefore heavier.

EP2154394A discloses a tensioner having the features of the preamble of claim 1.

### DISCLOSURE OF INVENTION

The object of the present invention is to solve the problems connected with the known drives and highlighted above and maximize the reactivity of the tensioner.

The above-mentioned object is achieved by a drive according to claim 1.

### BRIEF DESCRIPTION OF THE DRAWINGS

For a better understanding of the present invention, some embodiments are described below, by way of non-limiting examples and with reference to the accompanying drawings, in which:
Figure 1 is a schematic front view of an accessory drive for a vehicle engine according to a first embodiment of the present invention;
Figure 2 is an enlarged schematic view of a detail of figure 1;

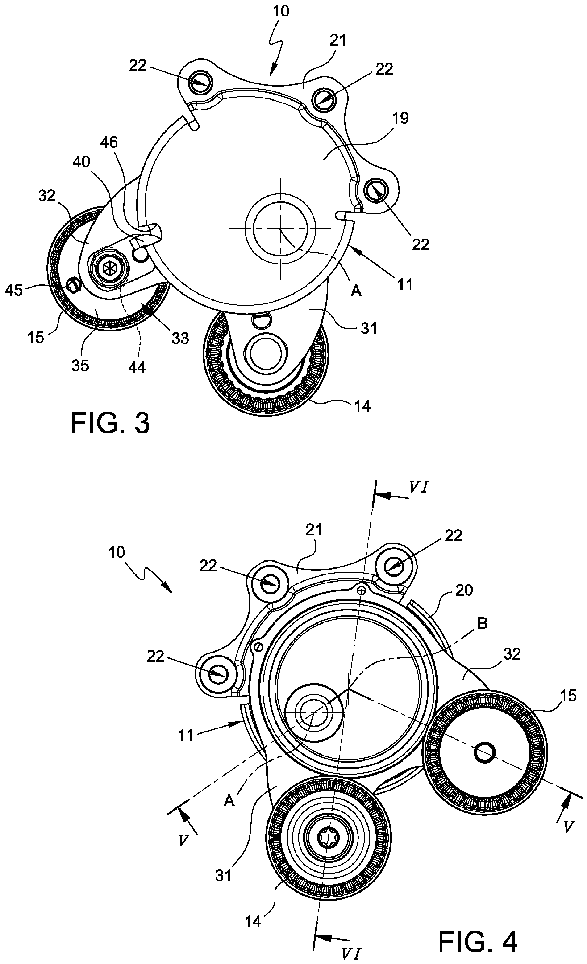

Figure 3 is a front elevation view of a tensioner according to the first embodiment of the invention;
Figure 4 is a rear elevation view of the tensioner of figure 3;
Figure 5 is a section according to the line V-V of figure 4;
Figure 6 is a section according to the line VI-VI of figure 4;
Figures 7 and 8 are exploded perspective views, from opposite sides, of the tensioner of figures 3 and 4;
Figure 9 is a front elevation view of a second embodiment of an accessory drive for a motor vehicle according to the present invention;
Figure 10 is a perspective view of a twin-arm tensioner of the drive of figure 8;
Figure 11 is a front view of the tensioner of figure 10;
Figure 12 is a section according to the line XII-XII of figure 11;
Figure 13 is a front view of a tensioner according to an embodiment variation;
Figure 14 is an axial section of an eccentric tightening idler pulley of the drive of figure 9;
Figures 15 and 16 are front elevation views of an embodiment of the drive of figure 9, respectively at installation of the belt and in operating conditions;
Figure 17 is a front elevation view of a third embodiment of an accessory drive for a vehicle engine according to the present invention;
Figure 18 is a view of a detail of an arm of the tensioner of figure 17;
Figure 19 is a section according to the line XIX-XIX of figure 18;
Figures 20 and 21 are perspective views of respective details of figure 19.

### BEST MODE FOR CARRYING OUT THE INVENTION

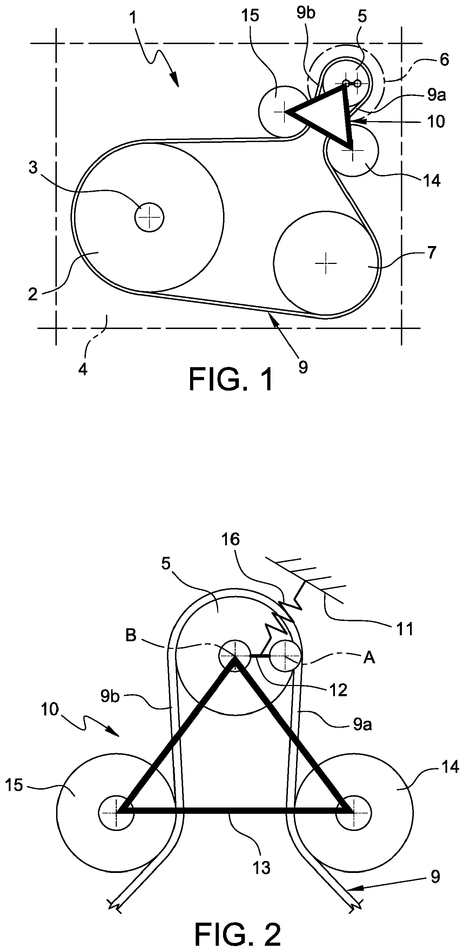

With reference to figure 1, the number 1 indicates overall an accessory drive for a motor vehicle.

The drive 1 comprises a first pulley 2 rotationally coupled to a drive shaft 3 of an internal combustion engine 4 of the vehicle, a second pulley 5 rotationally coupled to a rotor of a reversible electric machine 6 and a third pulley 7 for driving a compressor (not illustrated) of a conditioning system of the vehicle.

The drive 1 further comprises a belt 9, expediently of the poly-V type, which cooperates with the first, second and third pulley 2, 5, 7 for transmission of the movement between the same.

The drive 1 lastly comprises a tensioner 10 mounted on or in proximity to the electric machine 6 and comprising (figure 2):
- a support element 11 adapted to be fixed on or in proximity to the electric machine,
- an intermediate element 12 carried by the support element 11 and rotating with respect thereto about a first fixed axis A;
- a rigid tensioner element 13, carried by the intermediate element 12 and rotating with respect thereto about a second axis B parallel to the first axis A and distinct from it, the axis B being therefore mobile due to the rotation movement of the intermediate element 12 with respect to the support element 11 about the axis A;
- a first tensioner pulley 14 and a second tensioner pulley 15 carried by the tensioner element 13 and rotating with respect thereto about respective axes distinct from said first and second axis; the tensioner pulleys 14 and 15 cooperate with the back of respective branches 9a, 9b of the belt 9 arranged immediately upstream and downstream of the second pulley 5 (fig. 1);
- a spring 16 acting between the base element 11 and the intermediate element 12 to push the tensioner pulleys 14, 15 into contact with the belt 9.

A construction example of the tensioner 10 is described below, using the same reference numbers for the parts already described with reference to the preceding figures. The description of particular accessories such as bushings, bearings or other axial or radial support elements, used in order to reduce the friction and/or wear between the parts in relative movement, or to produce controlled damping between parts in relative movement, is omitted for the sake of brevity. Said details are illustrated, in particular in the exploded views, and their function will be evident to a person skilled in the art.

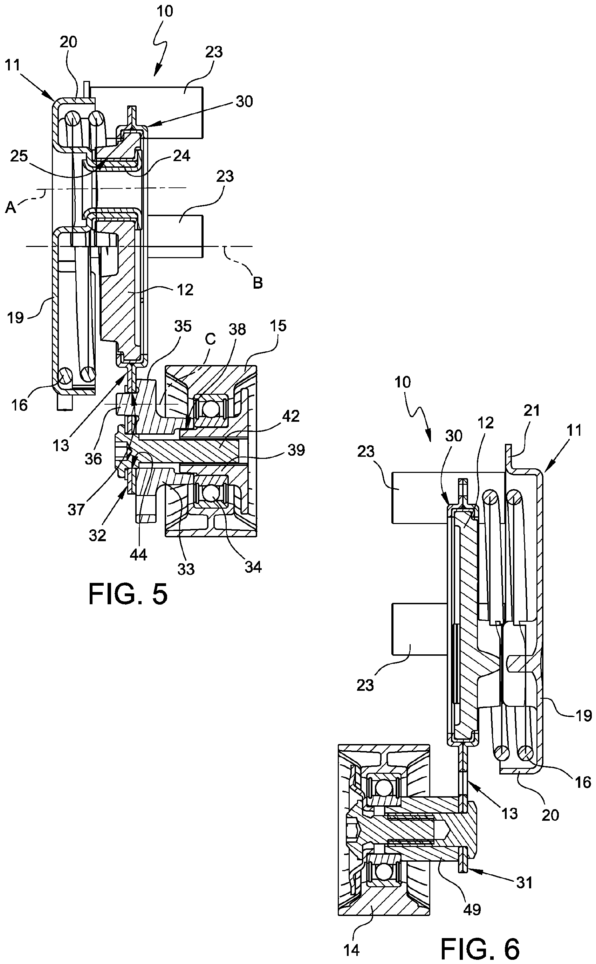

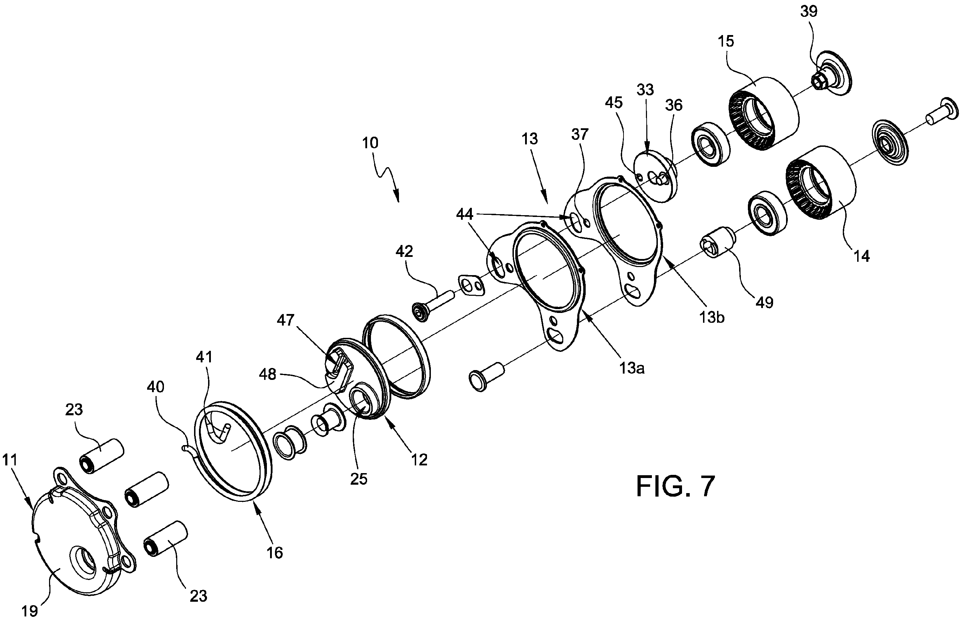

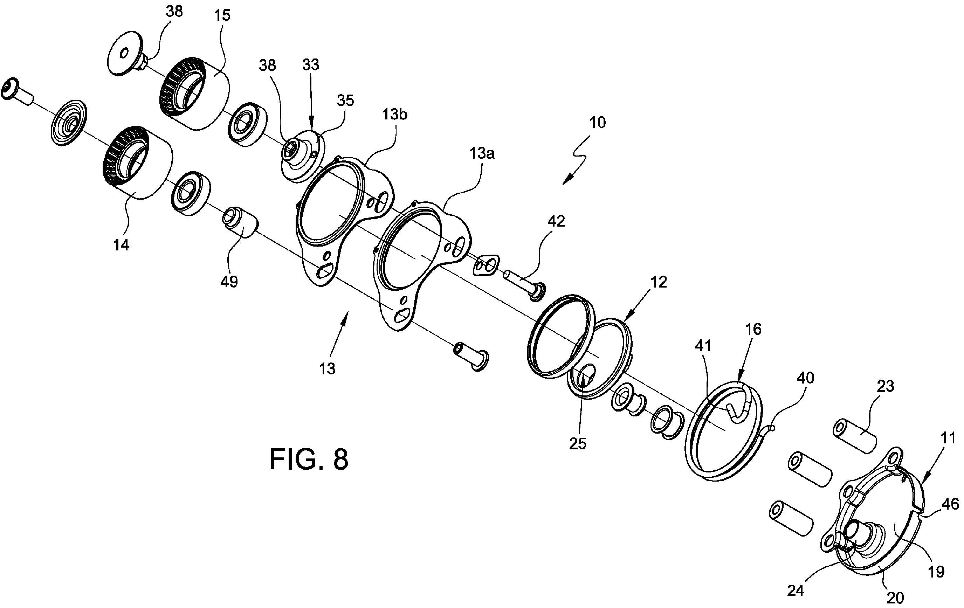

The support element 11 of the tensioner 10, expediently made of pressed sheet metal, is substantially disc-shaped with a flat bottom wall 19 and an outer perimeter edge 20 folded axially towards the electric machine 6 (figures 7 and 8). The support element 11 is further provided with a flanged outer lateral appendage 21, having a plurality of fixing holes 22 adapted to allow fixing on the casing (not illustrated) of the electric machine 6 by means of screws (not illustrated). Expediently, the screws are housed passing through respective tubular spacers 23 (figures 5-8) fixed to the flange 21, for example by means of welding or heading, and having the purpose of axially spacing the support element 11 from the casing of the electric machine 6. The support element 11 integrally comprises a pin 24 which axially extends from the bottom wall 19 in an eccentric position with respect to the edge 20 and defines the axis A.

The intermediate element 12 of the tensioner 10 is substantially disc-shaped having axis B with an eccentric hole 25 rotatingly engaged by the pin 24.

The tensioner element 13 comprises an annular hub portion 30 rotating around the intermediate element 12 (and therefore the axis B) and a pair of arms 31, 32 radially extending in directions diverging from the hub portion 30.

Expediently, the tensioner element 13 consists of a pair of half-shells 13a, 13b (figures 7, 8) made of pressed sheet metal, which are sandwich-assembled on opposite sides of the intermediate element 12 forming the hub portion 30 which encloses the intermediate element 12 and the arms 31, 32 on which the pulleys 14, 15 are rotatingly mounted. The two half-shells 13a, 13b are identical to each other for reasons of economy of scale.

According to the present invention, one of the two tensioning pulleys (15) is mounted in an adjustable manner on the respective arm 32, so as to allow variation of the centre distance between the pulleys axes to adjust the installation tension of the belt and compensate for the manufacturing tolerances of the belt itself and the drive layout.

For the above purpose, the tensioning pulley 15 is mounted by means of a bearing 34 on a sleeve 39 which is telescopically coupled to an intermediate bushing 33 (figure 7) by means of a prismatic coupling 38, for example with hexagonal section; the bearing 34 is axially comprised between respective shoulders of the sleeve 39 and the intermediate bushing 33.

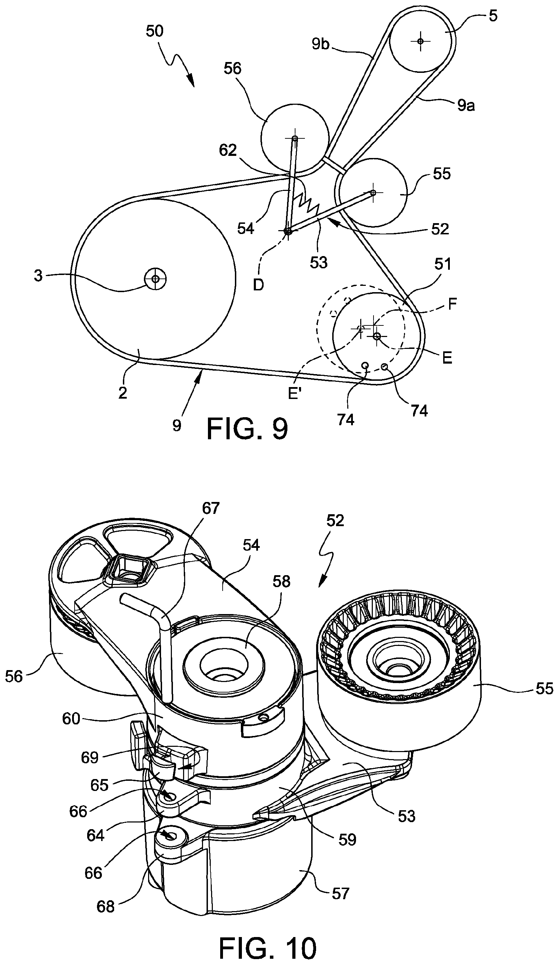

The intermediate bushing 33 comprises a discoidal end flange, on the opposite side of the bearing 34, from which an eccentric peg 36 extends axially (figures 7 and 9). The peg 36 is housed in a hole 37 of the arm 32, defining a rotation axis C of the intermediate bushing 33 with respect to the arm 32.

The arm 32 further comprises a curved slot 44 having centre of curvature on the axis C. A screw 42 is arranged passing through the slot 44 (without transversal play) and through the intermediate bushing 33, and is screwed into the sleeve 39.

The flange 35 of the intermediate bushing 33 is lastly provided with a prismatic, for example hexagonal, seat 45 for a wrench (not illustrated), arranged diametrically opposite the peg 36 with respect to the axis of the intermediate bushing 33.

Since the two half-shells 13A, 13B are identical to each other, also the arm 31 has the hole 37 and the slot 44, although not necessary for the purposes of adjustment of the position of the tensioner pulley 14. Therefore, the tensioner pulley 14 is mounted on a support 49 engaging the slot 44 in a fixed manner.

The spring 16, acting between the support element 11 and the intermediate element 12 so as to exert on the latter a thrust maintaining the pulleys 14 and 15 against the belt 9, is a helical spring with two coils, housed in the support element 11 and provided with end curls 40, 41 cooperating respectively with a seat 46 on the edge 20 of the support element 10 and a seat 47 obtained in an axial protrusion 48 of the intermediate element 12.

Operation of the tensioner 10, already partly evident from the preceding description, is as follows.

At installation, the screw 42 for blocking the intermediate bushing 33 is loosened, therefore the tensioner pulley 15 can be arranged in the most favourable position for installation of the belt 9. After the belt 9 has been installed on the pulleys 2, 5, 7, with the respective branches 9a, 9b arranged with their back into contact with the tensioner pulleys 14, 15, the tensioner pulley 15 can be moved, by means of a spanner in the seat 45 on the intermediate bushing 33 and rotating it about the axis C, to a position such as to bring the belt 9 to the nominal tension under the thrust of the spring 16. The screw 42 is then tightened, fixing the intermediate bushing 33 to the tensioner element 13.

During operation, the tensioner element 13 is arranged in a position of equilibrium to the rotation about the axis B under the action of the forces exchanged between the branches 9a, 9b of the belt 9 and the respective tensioner pulleys 14, 15. The tensioned branch of the belt 9 can be the branch 9a or the branch 9b according to the operating mode of the electric machine 6 (as a generator driven by the internal combustion engine 4 or as motor).

When the electric machine passes from one operating mode to the other, the tensioner element 13 rotates rigidly with respect to the intermediate element 12 about the axis B and is arranged in a new position of equilibrium, rotated with respect to the preceding position towards the new tensioned branch; also the intermediate element 12 finds a new position of equilibrium by rotating with respect to its axis A.

Since the tensioner element 13 is rigid and there is no elasticity interposed between the tensioner pulleys 14 and 15, the tensioner 10 is very reactive and promptly compensates for the instantaneous tension variations of the belt.

The length variations of the belt 9 during the working life thereof are compensated by rotation of the intermediate element 12 with respect to the support element 11 about the axis A (in anticlockwise direction with reference to figures 2 and 5) under the action of the spring 16.

Figures 9, 15 and 16 illustrate an accessory drive 50 according to a different embodiment of the present invention. The drive 50 is described below using the same reference numbers for elements equal or corresponding to elements already described.

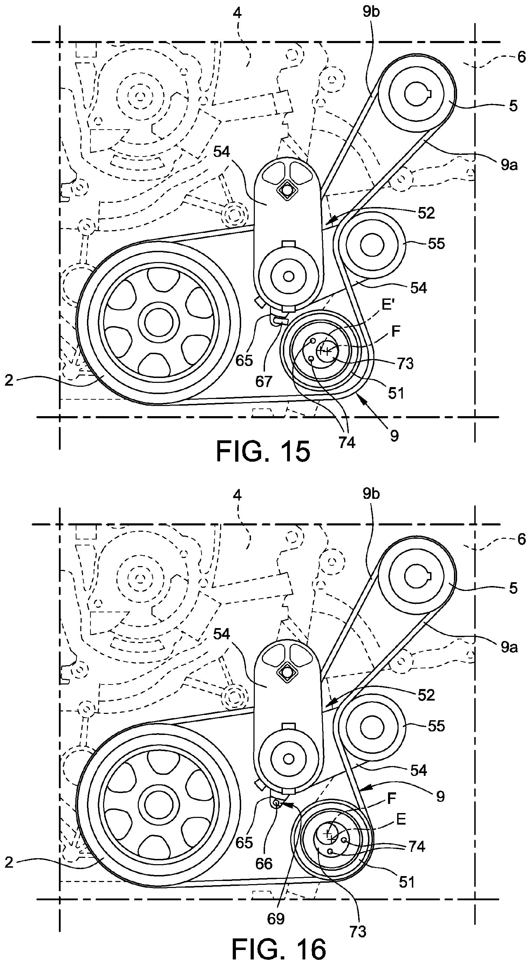

The drive 50 comprises a first pulley 2 rotationally coupled to a drive shaft 3 of the engine 4, a second pulley 5 rotationally coupled to a rotor of a reversible electric machine 6 (figures 15 and 16) and a third pulley 51 consisting of an idler tightening pulley.

The drive 50 further comprises a belt 9, preferably of the poly-V type, which cooperates with the first, the second and the third pulley 2, 5, 51 for transmission of the movement between the same.

Lastly, the drive 50 comprises a tensioner 52 with two arms (fig. 10-12, 15 and 16), in turn comprising a first arm 53 and a second arm 54 hinged around a common axis D arranged inside the path of the belt 9 and provided with respective tensioning pulleys 55, 56 arranged outside the path of the belt 9 and adapted to cooperate with the respective branches 9a, 9b of said belt.

The tensioner 52 (figures 10-12) comprises a base 57 adapted to be fixed to the engine 4, to which a pin 58 having an axis D, is fixed. The arms 53, 54 are provided with respective hub portions 59, 60 hinged to the pin 58 and defining a cylindrical cavity 61 in which a cylindrical helical spring 62 is housed. The spring 62 is constrained to the arms 53, 54 in a conventional manner not illustrated in detail, so as to bring the arms in proximity to each other and maintain the tensioning pulleys 55, 56 into contact with the belt 9.

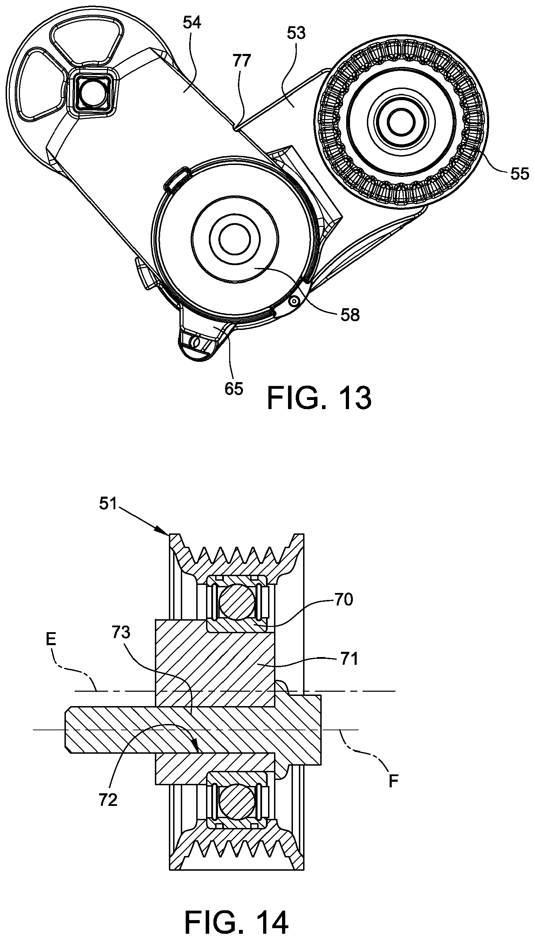

Expediently, the hub portions 59, 60 of the arms 53, 54 of the tensioner 52 comprise respective radial appendages 64, 65 which, in an installation position, are aligned with each other and with a corresponding appendage 68 (optional) of the base 57 (fig. 10). The appendages 65 and 68 are provided with respective holes 66 (figures 10 and 13) and the appendage 65 is provided with a C-shaped seat 69 which, when the holes are aligned with each other, they can be engaged by an L-shaped blocking peg 67. The blocking peg 67, when inserted, blocks the arms 53, 54 to each other and, optionally, to the base 57, countering the action of the spring 62.

Figure 14 illustrates the third pulley 51 which, according to the invention, is adjustable so as to vary the nominal tension of the belt 9. In particular, the pulley 51 is mounted by means of a bearing 70 on a pin 71 having axis E, which has an eccentric axial fixing hole 72 having axis F, parallel to the axis E and distinct from it.

The pin 71 is adapted to be fixed to the engine by means of a screw 73 arranged passing through the hole 67.

The pin 71 has, on one axial face opposite the engine, a pair of holes 74 (illustrated schematically in figure 9) for a wrench (not illustrated).

Operation of the drive 50 is as follows.

The tensioner 52 is mounted on the engine in the installation position, with the blocking peg 67 inserted.

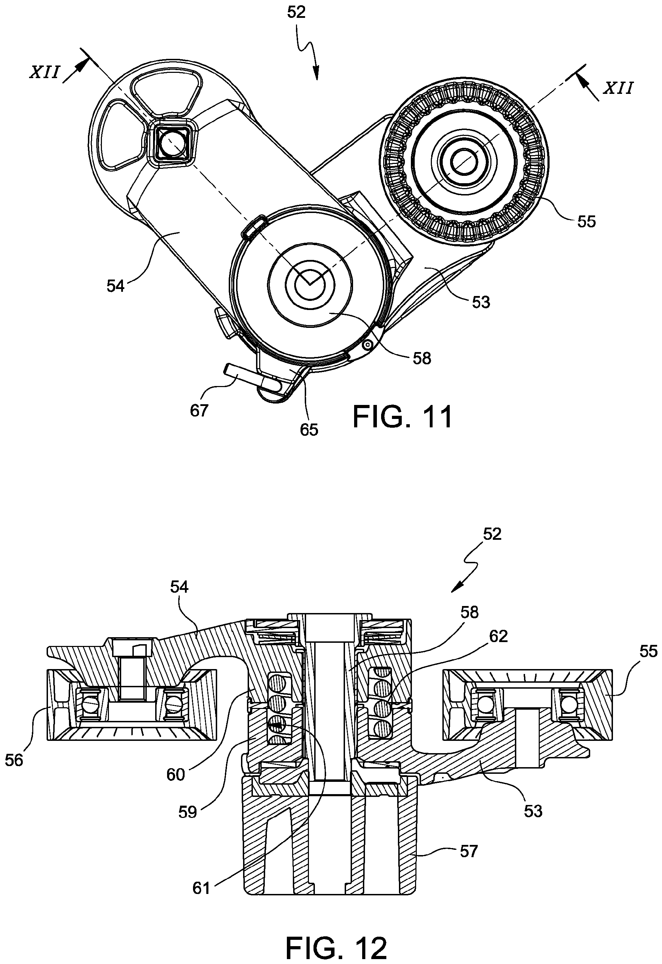

The screw 73 is loosened and the pin 71 of the third pulley 51 can be rotated so that the pulley 51 is retracted as far as possible with respect to the path of the belt 9 (figure 9, position shown by broken lines; figure 12), with the axis E in position E'.

Once the belt 9 has been fitted, the pin 71 can be rotated acting on the holes 74 by means of the wrench so as to bring the belt 9 to the desired nominal tension, after which the pin 71 is blocked on the engine 4 by tightening the screw 73.

The nominal tension can be chosen so that the forces transmitted from the branches of the belt 9a, 9b to the arms 53, 54 of the tensioner 52 balance the elastic force transmitted to the arms by the spring 62. It is therefore possible to identify when this tension value has been reached without measurements due to the fact that the peg 67 can be extracted without effort, since it is no longer subject to the elastic force of the spring 62. Figure 16 illustrates an operating condition of the drive 50, in which the peg 67 has been extracted.

Alternatively, the nominal tension can be higher than the equilibrium tension which allows the peg 66 to slide out. In this case, after the peg 67 has been extracted, the tension can be further increased until reaching a relative position between the arms 53, 54 defined by a visual indicator.

In figure 14, said visual indicator is defined by a notch 77 obtained on an edge 78 of the arm 54, which indicates that the nominal tension has been reached when aligned with an edge of the other arm 53.

The tensioner 52 works like a twin-arm tensioner of known type, and each time tensions the slack branch 9a or 9b of the belt, according to the operating mode of the electric machine. However, since the drive 50 operates at a predetermined nominal tension compensating the tolerances of the belt and the layout, said tension can be lowered with respect to the values used in the conventional drives.

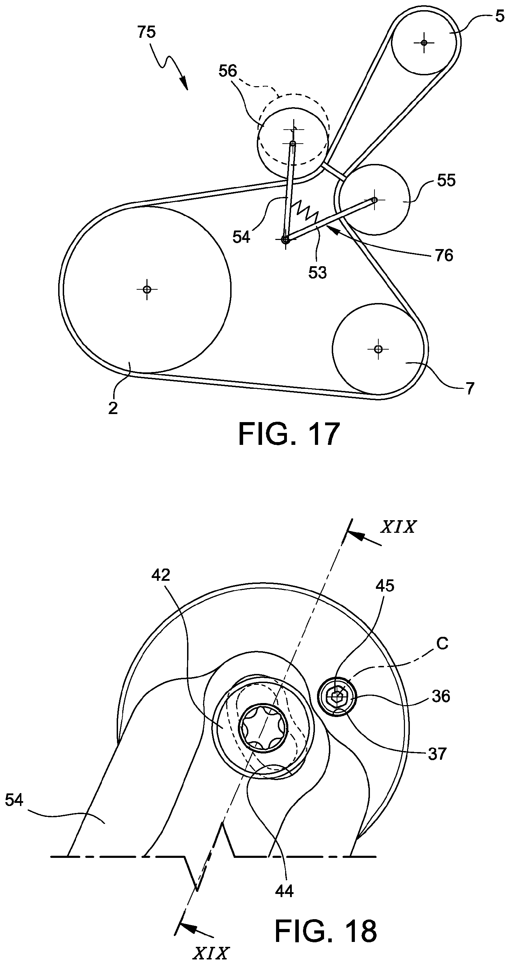

Figures 17-21 illustrate a third embodiment of a drive according to the invention, indicated overall by 75, which is described below in the aspects that differ from the preceding embodiments, using the same reference numbers to indicate parts equal or corresponding to parts already described.

The drive 75 is similar to the drive 50 described, with the difference that the tension adjustment function is not performed by the third pulley 7 (which has a fixed axis), but by one of the tensioning pulleys as in drive 1.

In particular, the drive 75 comprises a twin-arm tensioner 76 in which the tensioning pulley 56 is mounted in an adjustable manner on the arm 54. Otherwise, the tensioner 76 is identical to the tensioner 52 described.

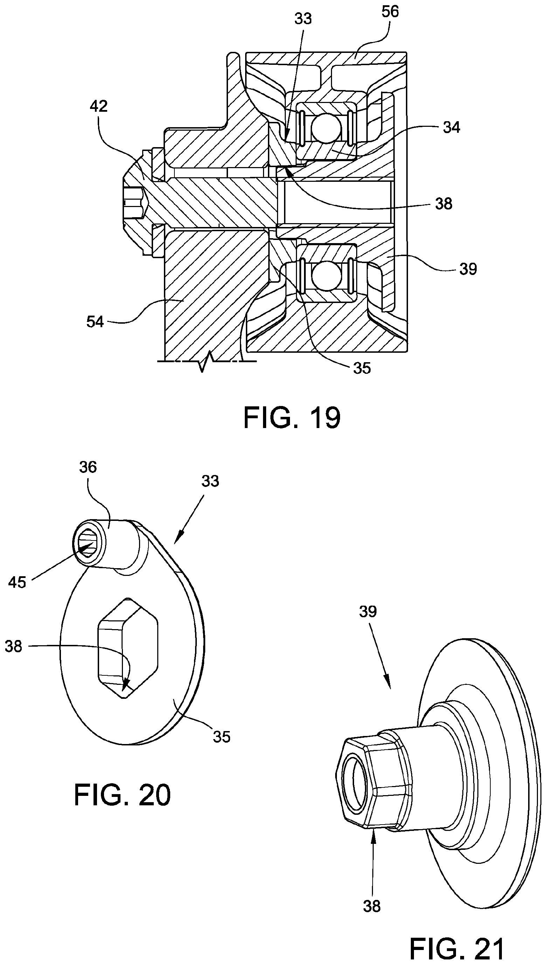

The tensioning pulley 56 is mounted on the arm 54 analogously to what is described for the pulley 15 in the drive 1, or on a sleeve 39 (figures 19 and 21) which is telescopically coupled with an intermediate bushing 33 (figures 19 and 20) by means of a prismatic coupling 38, for example with hexagonal section; the bearing 34 is axially comprised between respective shoulders of the sleeve 39 and the intermediate bushing 33, which define as a whole a support element for the pulley 56.

The intermediate bushing 33 comprises a discoidal end flange 35, on the opposite side of the bearing 34, from which an eccentric peg 36 axially extends (figures 18 and 20). The peg 36 is housed in a through hole 37 of the arm 54, defining a rotation axis C of the intermediate bushing 33 with respect to the arm 54. On the end of the peg 36 a prismatic, for example hexagonal, seat 45 is provided, for a wrench (not illustrated) .

The arm 32 further comprises a curved slot 44 having centre of curvature on the axis C (figure 18). A screw 42, arranged passing through the slot 44 and through the intermediate bushing 33, is screwed into an axial hole of the sleeve 39.

The operation of the drive 75, already partly evident from the previous description, is as follows.

The tensioner 76 is mounted on the engine in the installation position with the blocking peg 66 inserted.

The screw 52 is loosened and the intermediate bushing 33 is rotated around the axis C so that the pulley 56 is as retracted as possible with respect to the path of the belt 9 (figure 17, position shown by broken lines).

Once the belt 9 has been fitted, the intermediate bushing 33 can be rotated by acting on the seat 45 of the peg 36 with the wrench so as to bring the belt 9 to the desired nominal tension, after which the screw 52 is tightened thus blocking the axis of the tensioning pulley 56 with respect to the arm 54.

The nominal tension is determined without measurements, as described for the drive 50, detecting the position in which the locking peg 66 can be extracted without effort, or a predetermined relative position between the arms 53, 54.

Lastly it is clear that modifications and variations that do not depart from the protective scope defined by the claims can be made to the drives 1, 50 and 75 described.

In particular, in place of the tensioners described, tensioners of any type can be used on the condition, obviously, that they are provided with two tensioning pulleys adapted to cooperate with the respective branches of the belt. For example, the tensioning pulleys can be carried by one single common arm, or by two Y-shaped arms, or by an element rotating around the axis of the electric machine and by an arm hinged on the element rotating or sliding circumferentially with respect thereto. The tensioner can furthermore be of a linear type, i.e. with the tensioning pulleys constrained to perform a relative movement along a line. Lastly, two independent single-arm tensioners each acting on a respective branch of the belt can be used.

Whatever the embodiment of the tensioner, the adjustable position pulley can consist of one of the tensioning pulleys carried by the tensioner itself or by an idler pulley of the drive distinct from the tensioner.

## Claims

1. An accessory drive for an internal combustion engine (4) of a vehicle, comprising at least a first pulley (2) rotationally coupled to a drive shaft (3) of the internal combustion engine (4), a second pulley (5) rotationally coupled to a shaft of an electric machine (6), an endless drive element (9) cooperating with at least said first (2) and said second pulley (5), a tensioner (10; 52; 76) comprising a first and a second tensioning pulley (14, 15; 55, 56) and at least one spring (16) adapted to push the tensioning pulleys into contact with respective branches (9a, 9b) of the endless drive element (9) positioned on opposite sides with respect to the second pulley (5), and an adjustable-position pulley (15; 51; 56) configured to cooperate with the endless drive element (9) to vary the installation tension thereof, and a support element (11) adapted to be fixed on or in proximity to the electric machine (6); **characterized in that** the tensioner includes:
an intermediate element (12) carried by the support element (11) and rotating with respect thereto about a first fixed axis (A);
a rigid tensioner element (13) rotating with respect to the intermediate element (12) about a second axis (B) parallel to the first axis (A) and distinct therefrom;
the first and a second tensioning pulley (14, 15) being carried by the tensioner element (13) and rotating with respect thereto about respective axes distinct from said first and second axis (A, B) and arranged in use in a fixed relative position,
said at least one spring (16) acting between the support element (11) and the intermediate element (12) to push the tensioning pulleys into contact with the respective said branches (9a, 9b) of the belt (9),
and **in that** said adjustable-position pulley is one of the tensioning pulleys (15; 56).

2. The drive according to claim 1, **characterized in that** said adjustable-position pulley (56) is carried by a support element (33, 39) having an axis coincident with the axis of said pulley and an eccentric element (36) defining a rotation axis of the support element.

3. The drive according to claim 2, **characterized in that** the eccentric element is a peg (36) engaging a hole (37) defining an eccentric rotation axis of the adjustable-position pulley (56) .

4. The drive according to claim 3, **characterized in that** the peg (36) engages a hole (37) in said tensioner (10, 76), and **in that** the tensioner has a curved slot (44) having the centre of curvature on an axis of said hole (37) and housing a screw (42) for fixing said support element (33, 39).

5. The drive according to one of the preceding claims, **characterized in that** the support element comprises a sleeve (39) supporting a bearing (34) of the adjustable-position pulley (56) and a bushing (33) prismatically coupled to each other and defining respective shoulders for the bearing (34).

## Patentansprüche

1. Hilfsantrieb für einen Verbrennungsmotor (4) eines Kraftfahrzeugs, mit wenigstens einer ersten Riemenscheibe (2), die drehbar mit einer Antriebswelle des Verbrennungsmotors (4) gekoppelt ist, einer zweiten Riemenscheibe (5), die drehbar mit einer Welle einer elektrischen Maschine (6) gekoppelt ist, einem Endlosantriebselement (9), das mit der ersten (2) und/oder der zweiten Riemenscheibe (5) zusammenwirkt, einem Spanner (19; 52; 76) mit einer ersten und einer zweiten Spannrolle (14, 15; 55, 56) und wenigstens einer Feder (16), die ausgelegt ist, um die Spannrollen in Kontakt mit entsprechenden Zweigen (9a, 9b) des Endlosantriebselements (9) zu drücken, die an gegenüberliegenden Seiten bezüglich der zweiten Riemenscheibe (5) positioniert sind und einer positionsmäßig einstellbaren Rolle (15; 51; 56), die ausgestaltet ist, um zusammen zu wirken mit dem Endlosantriebselement (9), um dessen Einbauspannung zu verändern, sowie einem Tragelement (11), das ausgelegt ist, um an oder in der Nähe der elektrischen Maschine (6) befestigt zu werden;
**dadurch gekennzeichnet, dass** der Spanner aufweist:
ein Zwischenelement (12), das von dem Tragelement (11) getragen wird und sich in Bezug zu diesem um eine erste feste Achse (A) dreht;
ein starres Spannelement (13), das in Bezug auf das Zwischenelement (12) um eine zweite Achse (B), parallel zu der ersten Achse (A) und von dieser verschieden, dreht;
wobei die erste und eine zweite Spannrolle (14, 15) von dem Spannelement (13) getragen werden und diesbezüglich um jeweilige Achsen drehen, die von der ersten und zweiten Achse (A, B) unterschiedlich sind und die im Gebrauch in einer festen relativen Stellung angeordnet sind,
wobei die wenigstens eine Feder (16) zwischen dem Tragelement (11) und dem Zwischenelement (12) wirkt, um die Spannrollen in Kontakt mit den jeweiligen Zweigen (9a, 9b) des Riemens (9) zu drücken und
dass die positionsmäßig einstellbare Rolle eine der Spannrollen (15; 56) ist.

2. Antrieb nach Anspruch 1, **dadurch gekennzeichnet, dass** die positionsmäßig einstellbare Rolle (56) von einem Tragelement (33, 39) getragen wird, das eine Achse hat, die übereinstimmt mit der Achse der Rolle und ein exzentrisches Element (36) eine Rotationsachse des Tragelements definiert.

3. Antrieb nach Anspruch 2, **dadurch gekennzeichnet, dass** das exzentrische Element ein Mitnehmer (36) ist, der in ein Loch (37) eingreift, eine exzentrische Rotationsachse der positionsmäßig einstellbaren Rolle (56) definierend.

4. Antrieb nach Anspruch 3, **dadurch gekennzeichnet, dass** der Mitnehmer (36) in ein Loch (37) in dem Spanner (10, 76) eingreift und dass der Spanner einen gekrümmten Schlitz (44) hat, dessen Krümmungsmittelpunkt auf einer Achse des Lochs (37) liegt und das eine Schraube (42) aufnimmt zum Befestigen des Tragelements (33, 39).

5. Antrieb nach einem der vorstehenden Ansprüche, **dadurch gekennzeichnet, dass** das Tragelement eine Hülle (39) umfasst, die ein Lager (34) der positionsmäßig einstellbaren Rolle (56) trägt und eine Buchse (33) in prismatischer Kopplung miteinander und jeweilige Schultern für das Lager (34) definierend.

## Revendications

1. Relais d'accessoires pour un moteur à combustion interne (4) d'un véhicule, comprenant au moins une première poulie (2) accouplée de manière rotative à un arbre d'entraînement (3) du moteur à combustion interne (4), une seconde poulie (5) accouplée de manière rotative à un arbre d'une machine électrique (6), un élément d'entraînement sans fin (9) coopérant avec au moins ladite première (2) et ladite seconde poulie (5), un tendeur (10 ; 52 ; 76) comprenant une première et une seconde poulie de tension (14, 15 ; 55, 56) et au moins un ressort (16) adapté pour pousser les poulies de tension en contact avec des branches (9a, 9b) respectives de l'élément d'entraînement sans fin (9) positionnées sur des côtés opposés par rapport à la seconde poulie (5), et une poulie à position réglable (15 ; 51 ; 56) configurée pour coopérer avec l'élément d'entraînement sans fin (9) pour faire varier la tension d'installation de celui-ci, et un élément de support (11) adapté pour être fixé sur ou à proximité de la machine électrique (6) ; **caractérisé en ce que** le tendeur comporte :
un élément intermédiaire (12) porté par l'élément de support (11) et tournant par rapport à celui-ci autour d'un premier axe fixe (A) ;
un élément tendeur rigide (13) tournant par rapport à l'élément intermédiaire (12) autour d'un second axe (B) parallèle au premier axe (A) et distinct de celui-ci ;
la première et une seconde poulie de tension (14, 15) étant portées par l'élément tendeur (13) et tournant par rapport à celui-ci autour d'axes respectifs distincts desdits premier et second axes (A, B) et agencés lors de l'utilisation dans une position relative fixe,
ledit au moins un ressort (16) agissant entre l'élément de support (11) et l'élément intermédiaire (12) pour pousser les poulies de tension en contact avec lesdites branches (9a, 9b) respectives de la courroie (9),
et **en ce que** ladite poulie à position réglable est l'une des poulies de tension (15 ; 56).

2. Relais selon la revendication 1, **caractérisé en ce que** ladite poulie à position réglable (56) est portée par un élément de support (33, 39) ayant un axe coïncidant avec l'axe de ladite poulie et un élément excentrique (36) définissant un axe de rotation de l'élément de support.

3. Relais selon la revendication 2, **caractérisé en ce que** l'élément excentrique est une cheville (36) venant en prise avec un trou (37) définissant un axe de rotation excentrique de la poulie à position réglable (56).

4. Relais selon la revendication 3, **caractérisé en ce que** la cheville (36) vient en prise avec un trou (37) dans ledit tendeur (10, 76), et **en ce que** le tendeur comporte une fente incurvée (44) présentant le centre de courbure sur un axe dudit trou (37) et logeant une vis (42) pour fixer ledit élément de support (33, 39).

5. Relais selon l'une des revendications précédentes, **caractérisé en ce que** l'élément de support comprend un manchon (39) supportant un palier (34) de la poulie à position réglable (56) et une douille (33) accouplés de façon prismatique l'un à l'autre et définissant des épaulements respectifs pour le palier (34).
